Europäisches Patentamt

European Patent Office

Office européen des brevets

(11) Publication number: **0 077 679**
A2

## EUROPEAN PATENT APPLICATION

(21) Application number: **82305532.2**

(22) Date of filing: **18.10.82**

(51) Int. Cl.³: **H 02 G 3/04**

(30) Priority: **19.10.81 GB 8131486**

(43) Date of publication of application:
**27.04.83 Bulletin 83/17**

(84) Designated Contracting States:
**AT BE CH DE FR IT LI NL SE**

(71) Applicant: **RAYCHEM LIMITED**
**ROLLS HOUSE 7, Rolls Buildings Fetter Lane**
**London, EC4 1NL(GB)**

(72) Inventor: **O'Brien, James Martin**
**1 Osprey Close**
**Swindon Wiltshire, SN3 5DW(GB)**

(74) Representative: **Dlugosz, Anthony Charles et al,**
**Raychem Limited Patent and Legal Department Faraday**
**Road**
**Dorcan Swindon Wiltshire SN3 5HH(GB)**

(54) **Fire protection system.**

(57) A conduit for electrical cable, for example an electrical cable duct 1, contains a plurality of flexible envelopes 3 which are formed from a cross-linked polymeric material, preferably a halogen-free polymeric material, and which contains a non flammable liquid, preferably water.

The envelopes preferably have a high elongation to break at the boiling point of the liquid so that they can accommodate some evaporation of the liquid during a fire in the region of the conduit without bursting.

EP 0 077 679 A2

Croydon Printing Company Ltd.

This invention relates to cable conduits and to the protection of cables located therein from damage due to fire.

According to one aspect, the invention provides a conduit for electrical cable which contains a plurality of flexible envelopes which are formed from a cross-linked, polymeric material, and which contain a non-flammable liquid, preferably a liquid that comprises water.

The envelopes may be located along only part of the conduit but are preferably located along substantially the entire length of the conduit. Preferably the envelopes are arranged in the conduit between a wall of the conduit and the intended position of the cable or cables. It is possible for all the envelopes to be provided separately from one another although, in order to be able conveniently to arrange the envelopes in this manner and to ensure that the envelopes are correctly disposed along the conduit it is preferred for the envelopes, or at least a plurality of the envelopes to be concatenated in the form of a train. Thus, according to another aspect, the invention provides a train of concatenated flexible envelopes which are formed from a cross-linked polymeric material and which contain a non-flammable liquid.

The envelopes are most preferably in the form of sachets. A train of the sachets may be formed by extruding the polymeric material to form a tube, introducing a quantity of the liquid into the tube, sealing opposite sides of the wall together to form a train of sachets, for example by ultrasonic, radio frequency or hot plate welding or by heat sealing techniques, and cross-linking the polymeric material. The cross-linking step may be performed either before or after the opposite walls of the sachet are sealed but is preferably performed after they are sealed so that the cross-linking of the polymeric material across the seal increases the strength of the seal.

The polymeric material may be cross-linked by irradiation, for example, by means of an electron beam or by gamma radiation or it may be chemically cross-linked. Whichever cross-linking process is used, it may be advantageous to incorporate one or more co-curing agents for example poly-unsaturated monomers such as triallyl cyanurate, triallyl isocyanurate, diallyl phthalate, ethylene glycol dimethacrylate, trimethylolpropane trimethacrylate, pentaerythritol tetramethacrylate, allyl methacrylate and vinyl methacrylate. One method of chemical cross-linking that may be used in the process according to the invention involves grafting an unsaturated hydrolysable silane on the polymer so that the water or aqueous liquid that is introduced into the tube will cause the material to cure. This curing method is described, for example, in U.K. Patents Nos. 1,286,460 and 1,357,549, the disclosures of which are incorporated herein by reference. If the polymeric material is cross-linked by electron irradiation, each side of the sachets should be directly exposed to the electrons since the water enclosed by the polymeric material will absorb a significant quantity of the electrons. Where the polymeric material is cross-linked by irradiation, doses of at least 1, preferably at least 2 and most preferably at least 3 Mrads are preferred. Usually doses of not more than 20, more usually not more than 10 e.g. not more than 5 Mrads will be used depending on the material from which the envelopes are formed.

The polymeric material used to form the envelopes is preferably substantially halogen-free in order to reduce the amount of toxic or corrosive gases evolved when the conduit is subjected to fire. Preferably also the polymeric material has a softening point in the range of from 80 to 130°C. If the material has a softening point in the region of 100°C, for example from 90 to 110°C, (which, in the case of crystalline materials will correspond to the crystalline melting point of the material in its uncrosslinked form), the material will become highly elastomeric at that temperature and so, if the conduit is subjected to a fire, the envelopes will be able to increase in volume to accommodate some boiling of the water contained therein. This has the advantage that heat from the fire is absorbed to some extent by evaporation of the water without the envelopes bursting, thereby prolonging the period during which the conduit can be subjected to fire without the cable becoming damaged. In addition, it is observed that the period during which the envelopes burst and release the liquid is significantly increased by forming the envelopes from a cross-linked material, with the result that the liquid is released in a continuous manner over a longer period.

The material from which the envelopes are formed preferably have an elongation to break at the boiling point of the liquid of at least 400 percent, more preferably at least 500 percent and especially at least 600 percent. Preferably the material exhibits this elongation to break even at room temperature although this is not necessary for example where the material in its uncrosslinked form melts or softens below the boiling point of the liquid. In addition or alternatively, the material preferably has a tensile strength in the range of from 0.5 to 30 especially 2 to 20 MPa at room temperature.

Examples of polymers from which the envelopes may be formed include ethylene homo- or copolymers, expecially ethylene copolymers for example the compolymers described in U.K. Patent Specification No. 2,019,412, the disclosure of which is incorporated herein by reference. At present the most preferred polymers are copolymers of ethylene and vinyl acetate, especially those having a vinyl acetate content of up to 30 percent and most especially from 15 to 25 percent by weight. It has been found that the use of such polymers, when cross-linked, as the polymeric material forming the envelopes enables the conduit to withstand a fire for considerably longer than a corresponding conduit using envelopes formed from uncrosslinked polyvinyl chloride. In addition, it is found that considerably fewer envelopes have ruptured during exposure of the conduit to the fire than corresponding envelopes formed from uncross-linked p.v.c.

The envelopes are preferably incompletely filled with liquid, and should contain no gas, so that they are able to accommodate an increase in enclosed volume without stretching the polymeric material. This reduces the risk of rupture of the polymeric material due to heating in use, and during a fire, allows the envelope to withstand boiling of the water for still longer periods.

In many cases it may be desirable to provide the conduit with thermal insulation in order to increase the length of time before the cable is damaged still further. Thus, where the conduit is in the form of a cable duct, the walls of the cable duct and/or its base may be provided with a layer of insulation along its length. The envelopes may then be placed either directly on the insulation or on separate supports between the cables and insulation. Preferred materials for forming the insulation include fibrous or foamed materials, especially fibrous materials such as glass fibre or universal fibre mats.

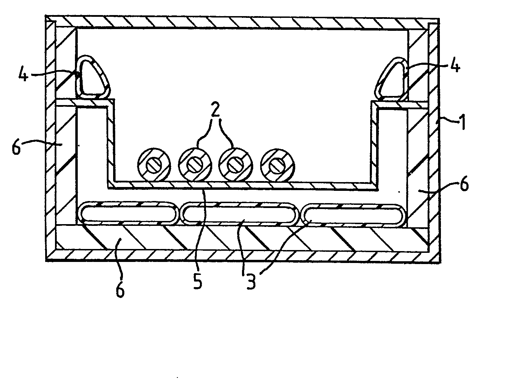

One form of conduit in accordance with the invention will now be described by way of example with reference to the accompanying drawing which is a transverse cross-sectional view thereof.

Referring to the accompanying drawing, a conduit for conveying a number of electrical cables 2 comprises a substantially "U" shaped metal duct 1 closed by a metal lid. The duct 1 contains, along its length, a number of supports 5 for supporting the cables 2 and maintaining them in their correct position and is provided with a number of trains of concatenated sachets 3 extending along the length of the duct base and sachets 4 extending along each duct wall. Additional thermal insulation is provided in the form of a mineral fibre mat, located between the sachets 3 and 4 and duct base and walls.

The sachets are formed from an ethylene/vinyl acetate copolymer sold by DuPont under the trade name "Elvax 460" which has been irradiated with high energy electrons to a +dose of about 2.5 to 3 Mrads.

If desired, the liquid may contain a dye or pigment so that any rupture or leakage of an envelope either in service or during a fire may easily be detected.

## Claims:

1. A conduit for electrical cable which contains a plurality of flexible envelopes which are formed from a cross-linked, polymeric material, and which contain a non-flammable liquid.

2. A conduit as claimed in claim 1. wherein the envelopes, or a plurality of the envelopes, are concatenated to form a train.

3. A conduit as claimed in claim 1 or claim 2 wherein the envelopes are in the form of sachets.

4. A conduit as claimed in any one of claims 1 to 3, wherein the polymeric material is halogen-free.

5. A conduit as claimed in any one of claims 1 to 4, wherein the polymeric material has a softening point in the range of from 80 to 120°C.

6. A conduit as claimed in any one of claims 1 to 5, wherein the polymeric material comprises an ethylene homo-or copolymer.

7. A conduit as claimed in any one of claims 1 to 6, wherein the envelopes are incompletely filled with the liquid so as to be able to accommodate an increase in enclosed volume without stretching the polymeric material.

8. A conduit as claimed in any one of claims 1 to 7, which contains solid thermal insulation.

9.      A train of concatenated flexible envelopes which are formed from a cross-linked polymeric material and which contain a non-flammable liquid.

10.      A train as claimed in claim 16 or claim 17, wherein the polymeric material is as defined in any one of claims 7 to 11.